# EUROPÄISCHE PATENTSCHRIFT

(11) **EP 0 634 861 B1**
(45) Veröffentlichungstag und Bekanntmachung des Hinweises auf die Patenterteilung: **28.08.2002**
(21) Anmeldenummer: 94110144.6
(22) Anmeldetag: 29.06.1994
(51) Int. Cl.: H04M 3/18, H04Q 11/04

(54) **Teilnehmeranschlusssatz für den Anschluss einer Teilnehmeranschlussleitung an eine digitale Zeitmultiplex-Fernsprechvermittlungsstelle**
Subscriber line circuit for connecting a subscriber line with a digital time division exchange
Circuit de ligne d'abonné pour raccorder une ligne d'abonné à un auto-commutateur temporel numérique

(30) Priorität: 12.07.1993 DE 4323281
(43) Veröffentlichungstag der Anmeldung: 18.01.1995
(73) Patentinhaber: SIEMENS AKTIENGESELLSCHAFT, 80333 München (DE)
(72) Erfinder: Bronold, Josef, Dipl.-Ing., D-82110 Germering (DE); Kovar, Kurt, D-82140 Olching (DE)

(56) Entgegenhaltungen:
- EP-A- 0 589 085
- EP-A- 0 589 231
- DE-A- 4 023 138
- DUGGE, KARL-WILHELM; HAFERKAMP, DIETERT: "Grundlagen der Elektrotechnik" 1985 , VOGEL-BUCHVERLAG , WÜRZBURG, GERMANY XP002122334 * Seite 84-85 *

## Beschreibung

Die Erfindung betrifft einen Teilnehmeranschlußsatz gemäß dem Oberbegriff des Patentanspruchs.

Die Teilnehmeranschlußleitungen, die in einen solchen Teilnehmeranschlußsatz münden, verbinden entweder mit Teilnehmerendgeräten oder dienen der Verbindung mit einer Nebenstellenanlage.

Die Aufgabe eines solchen Teilnehmeranschlußsatzes besteht im wesentlichen darin, für die Signal- und Sprachübertragung zwischen dem Teilnehmerendgerät bzw. zwischen der Nebenstellenanlage und der öffentlichen Fernsprechvermittlungsstelle zu sorgen. Im Zusammenhang mit der Auswertung von Signalisierungszeichen, die von der an die Teilnehmeranschlußleitung angeschlossenen Einheit zur Vermittlungsstelle hin übertragen werden, enthält ein solcher Teilnehmeranschlußsatz wenigstens eine Indikationsschaltung zum Erkennen von Signalisierungszeichen, bei denen es sich in diesem Falle um Gleichstromsignalisierungszeichen handelt.

Im Falle einer Berührung der Teilnehmeranschlußleitung mit der eine Spannung von z. B. 220 Volt führenden Netzleitung kann es bei den Eingangswiderständen solcher Indikationsschaltungen zu so starken Überhitzungen kommen, dass Brandgefahr besteht. Dies ist insbesondere bei Indikationsschaltungen der Fall, die gegen Erde geschaltete Eingangswiderstände haben, da hier im Falle einer Netzleitungsberührung gleichphasig Strom aus beiden Adern der Teilnehmeranschlußleitung gegen Erde fließen kann. Zur Vermeidung einer Brandgefahr in diesem Zusammenhang ist es schon bekannt, als durch die Netzspannung gefährdete Leitungsabschlußwiderstände, an denen die Indikationsschaltungen die Signalisierungssignale abgreifen bzw. für die Eingangswiderstände der Indikationsschaltungen hochbelastbare glasierte Drahtwiderstände zu verwenden. Solche Bauelemente sind jedoch teuer und erfordern einen hohen Platzbedarf. Darüber hinaus können sie das Entstehen von Bränden nur dann verhindern, wenn die Netzberührung nicht zu lange andauert.

Es ist auch schon bekannt, in diesem Zusammenhang integrierte Sicherungen vorzusehen, die im Falle von netzspannungsbedingten Überströmen durchbrennen. Es sind dann allerdings zumindest Teile der Anschlußschaltungen auszutauschen, um die ursprüngliche Betriebsfähigkeit wieder herzustellen.

Darüber hinaus ist eine Teilnehmeranschlußschaltung zum Anschluß eines Teilnehmergerätes an eine Fernmeldevermittlungsstelle bekannt (DE 40 23 138 A1), bei der in den Anschlußleitungsadern des betreffenden Teilnehmergerätes Thermosicherungen enthalten sind. Dadurch ist eine Schutzschaltung gegen externe Überspannungen gebildet, die es gleichzeitig ermöglicht zu erkennen, wann die externen Überspannungen wieder abgeklungen sind. Die betreffende bekannte Teilnehmeranschlußschaltung bietet jedoch keine Möglichkeit zur Unterscheidung zwischen Netzspannungen und Gleichstromsignalisierungszeichen.

Es ist schließlich auch schon bekannt (Dugge, Karl-Wilhelm; Haferkamp, Dietert: "Grundlagen der Elektrotechnik", 1985, Vogel-Buchverlag, Würzburg, Deutschland, XP002122334, Seiten 83-85), zur Überspannungsbegrenzung für Wechselspannung zwei mit entgegensetzter Polarität in Reihe geschaltete Zenerdioden zu verwenden. Eine solche auch als "Clipper-Schaltung" bezeichnete Begrenzerschaltung erlaubt jedoch ebenfalls keine Unterscheidung zwischen Netzspannungen und Gleichstromsignalisierungszeichen.

Die Aufgabe der Erfindung besteht nun darin, einen Teilnehmeranschlußsatz der obengenannten Art anzugeben, der schädliche Folgen von Netzspannungsberührungen der Teilnehmeranschlußleitung auf demgegenüber günstigere Weise verhindert und der außerdem die Unterscheidung zwischen Netzspannungen und Gleichstromsignalisierungszeichen sowie einen effektiveren Schutz durch Freischaltung (Abtrennung) von den Teilnehmeranschlußleitungsadern ermöglicht.

Diese Aufgabe wird durch die im kennzeichnenden Teil des Patentanspruchs angegebenen Mittel gelöst. Erfindungsgemäß wird demnach wenigstens eine der in einer Mehrzahl entsprechend der Auswertung unterschiedlicher Signalisierungskennzeichen vorhandenen Indikationsschaltungen so ausgestattet, dass sie in der Lage ist, unter Beibehaltung ihrer Funktionsfähigkeit Netzspannungsberührungen zu erkennen. Die Indikationsschaltungen sind erfindungsgemäß ferner derart ergänzt, dass im Falle eines Ansprechens der Indikationsschaltung unterschieden werden kann, ob der Empfang eines Signalisierungszeichens oder das Auftreten von Netzspannungen die Ursache für das Ansprechen war. Im letztgenannten Fall wird eine Abtrennung zumindest der Indikationsschaltung von den Adern der Teilnehmeranschlußschaltung bewirkt.

Nachstehend wird die Erfindung anhand eines Ausführungsbeispiels unter Bezugnahme auf eine Zeichnung näher erläutert.

In der Zeichnung zeigen:

Fig. 1 die Struktur einer Fernsprechvermittlungsanlage, deren Bestandteil der erfindungsgemäße Teilnehmeranschlußsatz ist.

Fig. 2 einen Teil eines Teilnehmeranschlußsatzes für den Anschluß einer Nebenstellenanlage.

Fig. 3 eine erfindungsgemäß ausgestattete Indikationsschaltung eines solchen Teilnehmeranschlußsatzes.

Fig. 4 ein die Spannungsverhältnisse bei einer solchen Indikationsschaltung veranschaulichendes Diagramm.

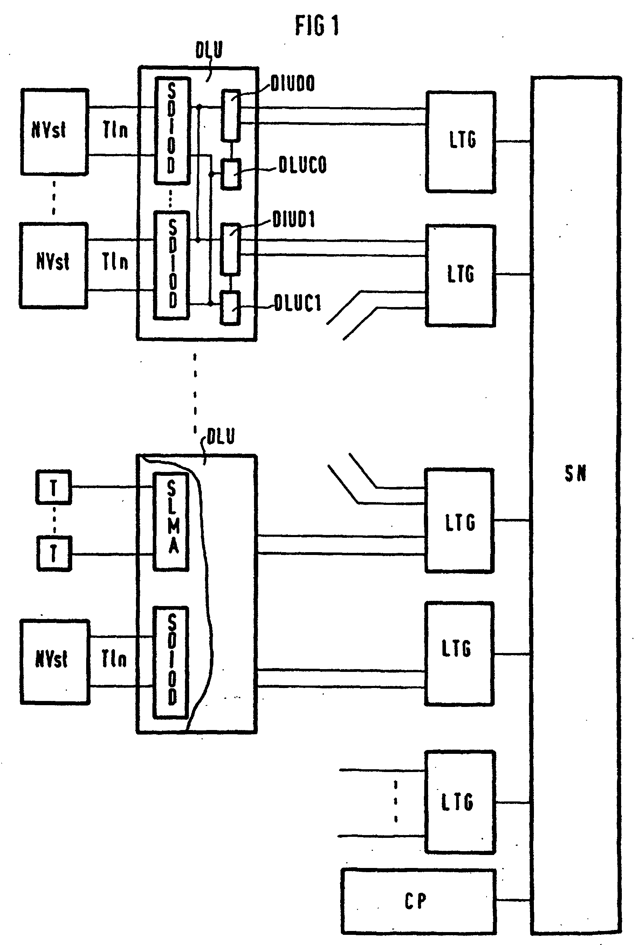

Die Fig. 1 zeigt als zentrale Teile einer öffentlichen Fernsprechvermittlungsstelle ein zentrales Koppelnetz SN, sowie einen zentralen Koordinationsprozessor CP.

Zur Peripherie dieser Vermittlungsstelle gehören Anschlußgruppen LTG, die die Schnittstelle zwischen der digitalen Umgebung der Vermittlungsstelle und dem zentralen Koppelnetz SN bilden. Diese Anschlußgruppen können, wie im dargestellten Fall, mit einer digitalen Übertragungsstrecke beschaltet sein, die sie mit einer digitalen Teilnehmerleitungseinheit DLU verbindet. Sie können aber auch mit digitalen Verbindungsleitungen beschaltet sein, die eine Verbindung zu anderen öffentlichen Vermittlungsstellen herstellen.

Die ebenfalls zur Peripherie gehörenden erwähnten digitalen Teilnehmerleitungseinheiten DLU dienen dem Anschluß entweder von Teilnehmerleitungen, die Verbindungen zu analogen Endgeräten T herstellen, in diesem Falle sind sie mit SLMA bezeichnet, oder sie dienen zum Anschluß von Teilnehmerleitungen, die der Verbindung mit mittleren und kleinen Nebenstellenanlagen NVst dienen, in welchem Falle sie mit SDIOD bezeichnet sind.

Die digitalen Teilnehmerleitungseinheiten DLU umfassen neben den erwähnten Teilnehmeranschlußsätzen SDIOD bzw. SLMA gedoppelte Steuereinheiten DLUC sowie Schnittstelleneinheiten DIUD, die die Schnittstellen zu den erwähnten Anschlußgruppen LTG herstellen.

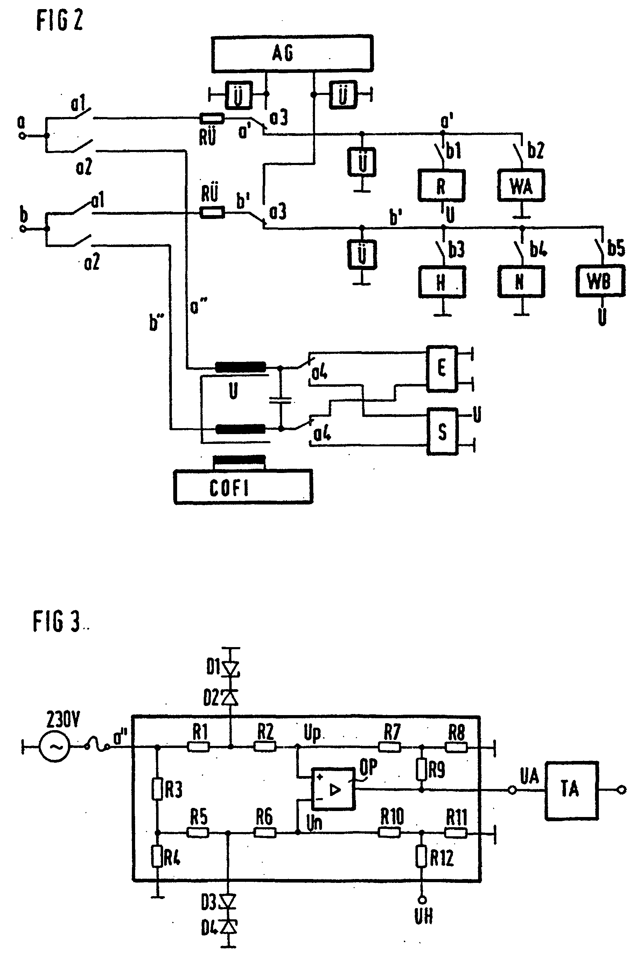

Die wesentlichen Aufgaben der Teilnehmeranschlußsätze sind die Signal- und Sprachübertragung zwischen der Vermittlungsstelle und den an die Teilnehmeranschlußleitungen angeschlossenen Einheiten, z. B. also der Nebenstellenanlage NVst.Die Fig. 2 (die der Fig. 2 der EP 0 589 085 A1 entspricht) zeigt nun den mit der Signalisierungsauswertung in Zusammenhang stehenden Teil eines Teilnehmeranschlußsatzes für den Anschluß einer Nebenstellenanlage, wobei es sich um den Teilnehmeranschlußsatz für eine Nebenstellenanlage handeln möge, von der aus direkt ein an die öffentliche Vermittlungsstelle angeschlossenes Teilnehmerendgerät angewählt werden kann und umgekehrt eine direkte Anwahl wenigstens eines Teils der Endgeräte der Nebenstellenanlage von der öffentlichen Vermittlungsstelle aus möglich ist. Man spricht in diesem Falle auch von einem Durchwahlsatz.

Eine nicht unmittelbar mit der Erfindung im Zusammenhang stehende Besonderheit dieses Durchwahlsatzes besteht darin, dass zwei Gruppen von Signalisierungselementen gebildet sind. Zu der einen Gruppe gehören die der unsymmetrischen Signalisierung dienenden Signalisierungselemente R, WA; H, N und WB, die bei der Sprachübertragung keine Funktionen erfüllen. Diese sind über elektronische Schalter b1 bis b5 an Abzweigungen a' und b' der Teilnehmerleitungsadern a und b der Teilnehmeranschlußleitung anschaltbar. Hinzu kommt ein Auslöseimpulsgenerator AG, der zwar ein Element der symmetrischen Signalisierung ist, jedoch im Zusammenhang mit der Sprach-übertragung keine Funktion ausübt. Eine gleichzeitige Anschaltung der erwähnten Elemente an die Teilnehmerleitungsadern erfolgt über Kontakte a3 eines Umschalterelais, womit sichergestellt ist, dass eine Leitungsanschaltung des Auslöseimpulsgenerators immer nur alternativ zu einer Anschaltung wenigstens eines der der unsymmetrischen Signalisierung dienenden Signalisierungselemente erfolgt.

Bestandteil der zweiten Gruppe sind die der symmetrischen Signalisierung dienenden Elemente E und S, die mittels der Kontakte a4 eines weiteren Umschalterelais an die Leitungsadernabzweigungen a'' und b'' angeschaltet sind. Bei den Signalisierungselementen E und S handelt es sich um Indikatoren für die Rückwärtszeichen im kommenden Verkehr, das sind also Zeichen, die im Falle einer von der öffentlichen Vermittlungsstelle her aufzubauenden bzw. aufgebauten Verbindung von der Nebenstellenanlage aus an die öffentliche Vermittlungsstelle gesendet werden.

Die beschriebene Gruppenbildung bringt den Vorteil mit sich, dass zur Anschaltung eines Teils der Signalisierungselemente elektronische Schalter verwendet werden können, im Gegensatz zu eine solche Gruppenbildung nicht aufweisenden Durchschaltesätzen, bei denen aus Symmetriegründen hierzu Relais verwendet wurden, was eine relativ teure und wenig platzsparende Lösung war.

In der Fig. 3 ist nun ein Teil einer solchen Indikationsschaltung dargestellt, wobei es sich beispielsweise um den an eine der Abzweigungen a'' oder b '' angeschlossenen Teil der Indikationsschaltung E oder S handeln möge. Ein identischer Teil ist an die jeweils andere Abzweigung b'' oder a'' angeschlossen zu denken. Die in der rechteckigen Umrahmung gezeigten Bestandteile dieser Indikationsschaltung entsprechen der Ausführung ohne die Realisierung des Erfindungsgedankens. Es handelt sich dabei um ein Widerstandsnetzwerk aus Widerständen R1 bis R12 sowie um einen Operationsverstärker OP, dessen Ausgang über die Widerstände R7 und R9 auf den nichtinvertierenden Eingang (+) zurückgekoppelt ist. Mit Hilfe des Widerstandsnetzwerkes werden auf der Teilnehmerleitungsadernabzweigung a'' auftretende Spannungen mit unterschiedlicher Amplitude als Spannungen Up und Un an den invertierenden und nichtinvertierenden Eingang des Operationsverstärkers OP geleitet.

Ein Potentialwechsel auf der Teilnehmerleitungsabzweigung a'' hat die Abgabe eines entsprechenden Ausgangssignals des Operationsverstärkers OP zur Folge.

Erfindungsgemäß sind nun zwischen den zu dem invertierenden Eingang des Operationsverstärkers führenden Widerständen R1 und R2 sowie R5 und R6 und einem Erdpotential führende Schaltpunkt jeweils Ableitschaltelemente in Form von Paaren jeweils mit ihrer Kathode miteinander verbundener Zenerdioden D1, D2 bzw. D3, D4 geschaltet.

Dem Ausgang der Indikationsschaltung ist ferner ein Zeitauswerteglied TA nachgeschaltet.

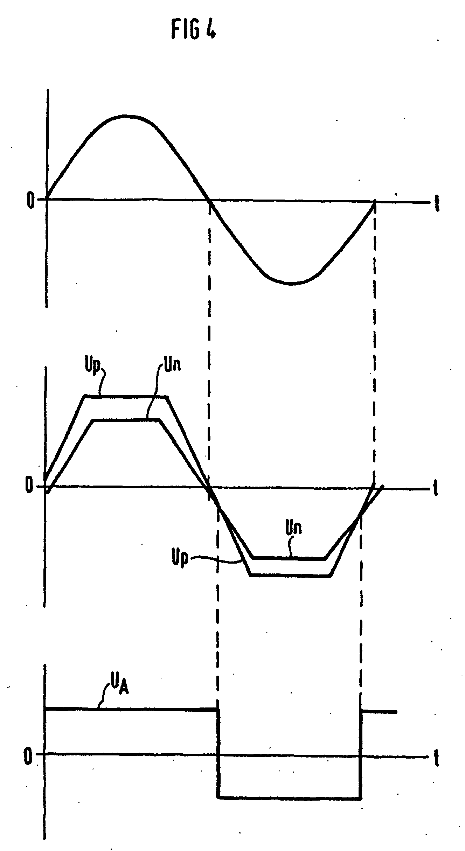

Wenn nun, wie in Fig. 3 angedeutet, durch Berührung einer Netzspannungsleitung mit der Teilnehmeranschlußleitung Netzspannung von beispielsweise 230 V an die Teilnehmerleitungsadernabzweigung a'' gelangt, dann wird diese Netzspannung aufgrund der Bemessung des Schwellwertes der erwähnten Zenerdioden derart beschnitten, dass keine Übersteuerung des Operationsverstärkers zu befürchten ist, siehe hierzu die mittlere Zeile von Fig. 4. Die in diesem Fall vom Operationsverstärker abgegebene Ausgangsspannung UA, siehe die untere Zeile in Fig. 4, wird durch die Zeitauswertung TA, die berücksichtigt, dass Gleichstromsignalisierungssignale über wesentlich längere Zeiten anliegen als die Periodendauer der Spannung als Reaktion auf eine solche Netzspannung, erkannt. Durch das von der Zeitbewertung in diesem Fall abgegebene Ausgangssignal wird dann eine Freischaltung der Indikationsschaltung von der Teilnehmerleitung veranlaßt, was im Falle der in Fig. 2 gezeigten Anordnung durch Abtrennen mittels der Relaiskontakte a2/a2 geschieht.

## Patentansprüche

1. Teilnehmeranschlußsatz für den Anschluß einer Teilnehmeranschlußleitung an eine digitale Zeitmultiplex-Fernsprechvermittlungsstelle, der wenigstens eine, einzeln oder als Bestandteil einer Gruppe an die Adern der Teilnehmeranschlußleitung anschaltbare oder in diese Adern einfügbare Indikationsschaltung zum Erkennen von auf der Teilnehmeranschlußleitung zur Vermittlungsstelle hin übertragenen Gleichstromsignalisierungszeichen aufweist,
**dadurch gekennzeichnet,**
**dass** wenigstens eine der Indikationsschaltungen (E) dadurch zum Erkennen von Netzberührungen der Adern (a, b) der Teilnehmeranschlußleitung ausnutzbar gemacht ist, dass ihrem Eingang zu einem auf Erdpotential liegenden Schaltungspunkt führende Ableitschaltelemente in Form von Paaren jeweils mit ihrer Kathode miteinander verbundener Zenerdioden (D1 bis D4) vorgeschaltet sind, deren Schwellwerte so bemessen sind, dass einerseits die Indikationsschaltung durch an ihre Eingangsklemmen gelangende Netzspannungen nicht übersteuert wird, andererseits aber das Erkennen von Gleichstromsignalisierungszeichen nicht beeinträchtigt wird,
**dass** die im Falle eines Ansprechens der Indikationsschaltung abgegebenen Ausgangssignale einer Zeitbewertung (TA) zur Unterscheidung zwischen Netzspannungen und Gleichstromsignalisierungs.zeichen unterworfen werden
und **dass** bei Feststellung einer Netzspannung eine Freischaltung wenigstens der einen Indikationsschaltung von den Adern der Teilnehmeranschlußleitung erfolgt.

## Claims

1. Exchange termination for the connection of a subscriber access line to a digital time-division multiplex telephone exchange, which has at least one indication circuit which can be connected individually or as a component of a group to the conductors of the subscriber access line, or can be inserted into these conductors, for identification of DC signalling characters which are transmitted on the subscriber access line to the exchange,
**characterized**
**in that** at least one of the indication circuits (E) can in this way be used to identify network contacts between the conductors (a, b) of the subscriber access line, in that their input is preceded by bypass switching elements, which lead to a circuit point connected to earth potential, in the form of pairs of zener diodes (D1 to D4), each of whose cathodes are connected to one another, and whose threshold values are set such that, firstly, the indication circuit is not overdriven by network voltages which reach their input terminals while, secondly, the identification of DC signalling characters is not adversely affected,
**in that** the output signals which are emitted in the event of the indication circuit responding are subjected to time assessment (TA) in order to distinguish between network voltages and DC signalling characters,
and **in that**, if a network voltage is found, at least one indication circuit is disconnected from the conductors of the subscriber access line.

## Revendications

1. Circuit de ligne d'abonné destiné au raccordement d'une ligne de raccordement d'abonné à un central numérique de commutation téléphonique à multiplex temporel, qui comporte au moins un circuit indicateur pouvant être raccordé, seul ou comme élément d'un groupe, sur les conducteurs de la ligne de raccordement d'abonné ou pouvant être inséré sur ces conducteurs et destiné à reconnaître des signaux de signalisation en courant continu transmis sur la ligne de raccordement d'abonné vers le central de commutation,
**caractérisé par le fait**
**que** au moins un des circuits indicateurs (E) a été rendu utilisable pour reconnaître des courts-circuits entre le secteur et les conducteurs (a, b) de la ligne de raccordement d'abonné par le fait que des éléments de dérivation, conduisant à un point commun mis au potentiel de la terre, sont connectés en amont de son entrée, sous la forme de paires de diodes de Zener (D1 à D4), reliées respectivement l'une avec l'autre par leur cathode, et dont la valeur de seuil est dimensionnée de telle sorte que, d'une part, le circuit indicateur ne soit pas saturé par les tensions secteur parvenant à ses bornes d'entrée, mais que, d'autre part, il n'ait pas d'influence sur la reconnaissance de signaux de signalisation en courant continu,
**que** les signaux de sortie produits dans le cas d'une réponse du circuit indicateur sont soumis à une analyse de temps (TA) pour différencier tensions secteurs et signaux de signalisation en courant continu
et **que**, dans le cas où une tension secteur est détectée, on provoque la déconnexion du au moins un circuit indicateur des conducteurs de la ligne de raccordement d'abonné.
